(19) Europäisches Patentamt
European Patent Office
Office européen des brevets

(11) **EP 4 450 477 A1**

(12) **EUROPEAN PATENT APPLICATION**
published in accordance with Art. 153(4) EPC

(43) Date of publication:
**23.10.2024 Bulletin 2024/43**

(51) International Patent Classification (IPC):
*C04B 35/48* (2006.01)    *C04B 35/50* (2006.01)
*C04B 35/622* (2006.01)

(21) Application number: 23752463.2

(22) Date of filing: 13.02.2023

(52) Cooperative Patent Classification (CPC):
**C04B 35/48; C04B 35/50; C04B 35/505;
C04B 35/622**

(86) International application number:
**PCT/CN2023/075757**

(87) International publication number:
**WO 2023/151685 (17.08.2023 Gazette 2023/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.02.2022  CN 202210135456**

(71) Applicants:
• **Grirem Hi-Tech Co., Ltd.**
  **Langfang, Hebei 065201 (CN)**
• **Grirem Advanced Materials Co., Ltd.**
  **Beijing 100088 (CN)**
• **Rare Earth Functional Materials (Xiong'An)**
  **Innovation Center Co., Ltd.**
  **Baoding, Hebei 071700 (CN)**

(72) Inventors:
• **HUANG, Xiaowei**
  **Beijing 100088 (CN)**
• **YANG, Juanyu**
  **Beijing 100088 (CN)**
• **WANG, Ning**
  **Beijing 100088 (CN)**
• **FENG, Zongyu**
  **Beijing 100088 (CN)**
• **DU, Lei**
  **Beijing 100088 (CN)**
• **ZHENG, Yuanyuan**
  **Beijing 100088 (CN)**
• **LIU, Yanxiao**
  **Beijing 100088 (CN)**
• **ZHANG, He**
  **Beijing 100088 (CN)**

(74) Representative: **Huang, Liwei**
  **Cäcilienstraße 12**
  **40597 Düsseldorf (DE)**

(54) **GRAIN-BOUNDARY- AND SURFACE-DOPED RARE-EARTH ZIRCONIUM-BASED CERAMIC MATERIAL, PREPARATION METHOD THEREFOR, AND USE THEREOF**

(57)    The present invention relates to a rare earth zirconium-based ceramic material which is doped at surface and at grain boundary and a preparation method and application thereof, and part of doped elements are positioned at the grain boundary and surface of the rare earth zirconium-based ceramic material by a step-by-step doping method. The sintering activity of the rare earth zirconium-based ceramic material can be changed by adjusting the type and content of doping elements at the grain boundary and the surface, thereby enabling the control of the grain size and the grain boundary number and characteristics of the rare earth zirconium-based ceramic material, and finally optimizing the properties, such as electrical and mechanical properties, of the material. The doping method has the advantages of simple process, low cost and high universality, and can meet the requirements of different rare earth zirconium-based ceramics on doping elements, and thus is suitable for large-scale application. The rare earth zirconium-based ceramic material obtained by adopting the technical solution provided by the invention can be used in various fields, such as grinding media, optical fiber connectors, mobile phone backboards, dental materials, biological ceramics, thermal barrier coatings, oxygen sensors or nitrogen-oxygen sensors, and solid oxide fuel cells.

**(Cont. next page)**

EP 4 450 477 A1

RE, Zr-containing solution | Basic precipitant

Precipitation

Post-treatment

A liquid salt solution of M

RESZ precursor

Heat treatment

Calcination

Rare earth zirconium-based ceramic material

FIG. 1

## Description

### Cross-Reference to Related Applications

The present application is based on and claims priority to Chinese patent application No. 202210135456.3, filed on February 14, 2022, the entire content of which is incorporated herein by reference.

### Technical Field

The present invention relates to the technical field of ceramic materials, and in particular relates to a rare earth zirconium-based ceramic material which is doped at surface and at grain boundary and a preparation method and application thereof.

### Background Art

Rare earth zirconium-based ceramic materials have excellent physical and chemical properties, and are widely used in high-end fields such as defense and military industries, biomedicine, new energy resources, electronic information, and automotive. In the biomedical field, for example, their good biocompatibility and mechanical properties make them the most ideal materials for dental repair so far. In the field of information and communication, the characteristics of high strength, high toughness and no signal shielding make them the preferred housing materials for 5G cell phones. In the aerospace field, excellent thermal insulation and high temperature stability make them very critical materials for thermal barrier coatings for aircraft engines. In the environmental protection field, their corrosion resistance and oxygen ion conductivity make them key materials for automotive oxygen sensors or nitrogen-oxygen sensors. In the energy source field, the high oxygen ion conductivity makes them the most ideal electrolyte materials for solid oxide fuel cells.

In summary, improving the mechanical and electrical properties of rare earth zirconium-based ceramic materials is critical for improving their usability. Doping modification is a common means for improving the properties of rare earth zirconium-based ceramics. Previous studies have shown that doping with the element Ce can significantly improve the toughness of rare earth zirconium-based ceramics, the resulting materials have been applied in special structural components as well as in grinding media for special industries. The doping elements such as Ni, Er and Yb can significantly reduce the thermal diffusion coefficient and thermal conductivity of a rare earth zirconium-based ceramic, which make it a potential new thermal barrier coating material. Doping with Yb, Gd or Ce, on the other hand, can improve the ionic conductivity of rare earth zirconium-based ceramics and help to prevent high-temperature phase change and enhance the thermal stability of the material, and such doped rare earth zirconium-based ceramics have attracted wide attention in the fields of gas sensors, solid oxide fuel cells, and so on. However, improving the performance of rare earth zirconium-based ceramics by simple element doping shows obvious limitations, and the performance requirements for rare earth zirconia-based ceramic materials in the latest application fields are increasingly high, so there is an urgent need to further improve the mechanical and electrical properties of rare earth zirconia-based ceramics.

### Summary Of The Invention

Given the situation of the prior art described above, the present invention aims to provide a rare earth zirconium-based ceramic material which is doped at surface and at grain boundary and a preparation method and application thereof. By doping specific elements at the grain boundary and surface of the rare earth zirconium-based ceramic powder material, the sintering activity of the rare earth zirconium-based ceramic material can be changed based on different types and contents of doping elements, thereby enabling the control of the grain size, the number and characteristics of the grain boundary to enhance physical and chemical properties such as material strength, thermal shock resistance, ionic conductivity, so as to meet the requirements in a variety of applications including bioceramics, thermal barrier coatings, oxygen sensors or nitrogen oxide sensors, and solid oxide fuel cells.

To achieve the object of the invention, in a first aspect of the present invention, provided is a rare earth zirconium-based ceramic material which is doped at surface and at grain boundary having the formula $RE_xZr_{1-x-y}M_yO_{2-z}$, where

RE is a rare earth element;
M is a cationic doping element;

$$0.03 \leq x \leq 0.5,\ 0 < y \leq 0.15,\ 0.01 \leq z < 0.3.$$

Further, the RE is one or a combination of more than one selected from Sc, Y, La, Gd, and Ce.

Further, the M comprises one or a combination of more than one selected from a cationic transition metal element, an alkaline earth metal element, Al, Ga, In, Ge, Sn, Sb, Bi, Si, and a rare earth element.

Further, the M comprises one or a combination of more than one selected from Mg, Ca, Sr, Al, Ga, V, Fe, Mn, Ni, Zn, Nb, In, Bi and a rare earth element, preferably one or a combination of more than one selected from Mg, Sr, Al, V, Ni, Bi, La, Ce, Pr, Nd, Sm, Eu , Gd, Er, Yb, Lu, Y and Sc, further preferably one or a combination of more than one selected from Mg, Al, Ni, Bi, La, Ce, Gd, Yb, and Lu.

Further, the M in the rare earth zirconium-based ceramic material is not more than 15%, preferably not more than 10%.

Further, the rare earth zirconium-based ceramic material contains an oxide of M at the grain boundary and surface.

Further, the rare earth zirconium-based ceramic material is one or more selected from a cubic fluorite structure, a tetragonal phase, a monoclinic phase and a rhombohedral phase, preferably one or two of the cubic fluorite structure and the tetragonal phase.

In a second aspect of the present invention, provided is a method for preparing the rare earth zirconium-based ceramic material which is doped at surface and at grain boundary according to the first aspect of the invention, comprising the steps of:

> S1. mixing aqueous solutions of RE and Zr compounds in a stoichiometric ratio required for the product to obtain a mixed feed solution; adding the mixed feed solution and a basic substance to a reactor for carrying out a precipitation reaction, and filtering, washing, drying and calcining the resulting precipitate to obtain a rare earth zirconium-based oxide powder;
>
> S2. mixing the rare earth zirconium-based oxide powder material obtained in step S1 with a liquid salt of the doping element M, and drying, performing one or two heat treatments and then one or two calcinations to obtain the rare earth zirconium-based ceramic material which is doped at surface and at grain boundary.

In a third aspect of the present invention, provided is a method for preparing the rare earth zirconium-based ceramic material which is doped at surface and at grain boundary according to the first aspect of the invention, comprising the steps of:

> S1. mixing aqueous solutions of RE and Zr and part of M compounds in a stoichiometric ratio required for the product to obtain a mixed feed solution; adding the mixed feed solution and a basic substance to a reactor for carrying out a precipitation reaction, and filtering, washing, drying and calcining the resulting precipitate to obtain a rare earth zirconium-based oxide powder containing the M element;
>
> S2. mixing the rare earth zirconium-based oxide powder containing the M element obtained in step S1 with the liquid salt of the remaining doping element M, and drying, performing one or two heat treatments and then one or two calcinations to obtain the rare earth zirconium-based ceramic material which is doped at surface and at grain boundary.

Further, the Zr-containing aqueous solution in step S1 comprises one or a combination of more than one aqueous solution of zirconium oxychloride, zirconyl nitrate, zirconyl sulfate, zirconium acetate, and zirconium citrate.

Further, the Re-containing aqueous solution in step S1 comprises one or a combination of more than one aqueous solution of chloride, nitrate, sulfate, acetate, and citrate of rare earths.

Further, the liquid salt of the doping element M comprises one or a combination of one or more molten salt or aqueous solution of chloride, nitrate, sulfate, acetate, citrate and amino acid salt.

Further, the basic substance comprises magnesium bicarbonate, urea and at least one selected from hydroxide, carbonate or bicarbonate containing at least one selected from ammonium, sodium and potassium, preferably at least one selected from sodium hydroxide, urea, ammonia and ammonium bicarbonate.

Further, the pH value in the precipitation process in step S1 is controlled to be 4.5 to 14, preferably 5 to 11, and the pH value at the precipitation endpoint is controlled to be 8 to 13, preferably 9 to 11; and the temperature during the precipitation process is 0 to 120 °C, preferably 10 to 80 °C.

Further, the calcination temperature in step S1 is 600 to 1100 °C, preferably 650 to 950 °C, and the calcination time is 1 to 24 h, preferably 3 to 15 h.

Further, the heat treatment temperature in step S2 is 200 to 750 °C, preferably 400 to 600 °C, further preferably 400 to 550 °C, and the heat treatment time is 1 to 24 h, preferably 1 to 12 h.

Further, the calcination temperature in step S2 is 700 to 1200 °C, preferably 800 to 1100 °C, further preferably 900 to 1100 °C, and the calcination time is 1 to 24 h, preferably 3 to 15 h.

In a fourth aspect of the present invention, provided is use of the rare earth zirconium-based ceramic material which is doped at surface and at grain boundary according to the first aspect of the invention in various fields such as grinding media, optical fiber connectors, mobile phone backboards, dental materials, biological ceramics, thermal barrier coatings, oxygen sensors or nitrogen-oxygen sensors, and solid oxide fuel cells.

In summary, the present invention provides a rare earth zirconium-based ceramic material which is doped at surface and at grain boundary as well as preparation method and application thereof, in which the doping element is located at the grain boundary and surface by grain-boundary doping. Based on the differences in valence, atomic radius, and content of different doping elements, grain boundary and surface doping can change the sintering activity of rare earth zirconium-based ceramic materials, thereby controlling the grain size, the number of grain boundaries, and the grain boundary characteristics. When the doping element increases the sintering activity and decreases the number of grain boundaries, it will lead to a decrease in the grain boundary resistance of the rare earth zirconium-based ceramic material, thereby increasing the ionic conductivity of the rare earth zirconium-based ceramic material; when the doping element decreases the sintering activity and increases the number of grain boundaries, it will lead to the grain refinement of the rare earth zirconium-based ceramic material, thereby improving the mechanical properties and the high temperature stability of the rare earth zirconium-based ceramic material. The technical solution of the present invention provides a universal method of grain boundary and surface doping, which realizes efficient and low-cost improvement of mechanical, electrical, and thermal properties of rare-earth zirconium-based ceramic materials to meet the needs of different rare-earth zirconium-based ceramic materials with respect to the doping elements.

**Brief Description of Drawings**

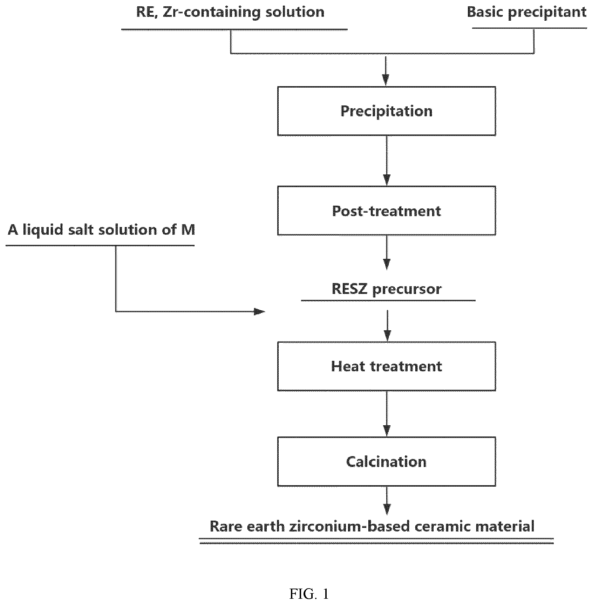

FIG. 1 is a flowchart of a method for preparing the grain boundary doped rare earth zirconium-based ceramic of the present invention.

**Detailed Description of the Invention**

In order to make the purpose, technical solutions and advantages of the invention clearer, the invention will be further explained in detail below in connection with the examples with reference to the drawings. It should be understood that these descriptions are merely exemplary and are not intended to limit the scope of the invention. In addition, descriptions of well-known structures and techniques are omitted below to avoid unnecessary confusion about the concepts of the present invention.

In a first aspect of the present invention, provided is a rare earth zirconium-based ceramic material which is doped at surface and at grain boundary having the formula $RE_xZr_{1-x-y}M_yO_{2-z}$, where RE is a rare earth element; M is a cationic doping element; $0.03 \leq x \leq 0.5$, $0 < y \leq 0.15$, $0.01 \leq z < 0.3$.

Among them, RE may be one or a combination of more than one selected from Sc, Y, La, Gd, and Ce; the cationic doping element M may be one or a combination of more than one selected from a cationic transition metal element, an alkaline-earth metal element, Al, Ga, In, Ge, Sn, Sb, Bi, Si, and a rare earth element; preferably, M is one or a combination of more than one selected from Mg, Ca, Sr, Al, Ga, V, Fe, Mn, Ni, Zn, Nb, In, Bi, and a rare earth element; further preferably, M is one or a combination of more than one selected from Mg, Sr, Al, V, Ni, Bi, La, Ce, Pr, Nd, Sm, Eu , Gd, Er, Yb, Lu, Y, and Sc; further preferably, M is one or a combination of more than one selected from Mg, Al, Ni, Bi, La, Ce, Gd, Yb, and Lu. The molar content of the cationic doping element M in the rare earth zirconium-based ceramic material is not more than 15%, preferably not more than 10%. The cationic doping element M is disposed at the grain boundary and surface of the rare earth zirconium-based ceramic material, or is disposed at the grain boundary and surface as well as within grains. The cationic doping element M is converted to one or more selected from an oxide, a nitrogen-containing compound and a composite thereof at the grain boundary and surface, or at the grain boundary and surface as well as within grains, of the rare earth zirconium-based ceramic material. The rare earth zirconium-based ceramic material may be one or more selected from a cubic fluorite structure, a tetragonal phase, a monoclinic phase and a rhombohedral phase, preferably one or two of the cubic fluorite structure and the tetragonal phase.

The rare earth zirconium-based ceramic material provided in the present examples can result in different rare earth zirconium-based ceramic powders by changing the doping elements and adjusting the doping process for applying to different scenarios: the rare earth zirconium-based ceramic material is doped with the cationic element M at the grain boundary and surface, allowing for the incorporation of M oxide at these locations, the grain boundary characteristics of the rare earth zirconium-based ceramic material can be changed by adjusting the type and content of doping elements at the grain boundary and surface, thereby enabling the control of the grain size, the grain boundary number and characteristics of the rare earth zirconium-based ceramic material, and finally optimizing the properties, such as electrical and mechanical properties, of the material. Doping specific types of cationic elements M at the grain boundary and surface will enhance the sintering activity, reduce the grain boundaries, facilitate the migration of oxygen ions at the grain boundary, reduce the grain boundary resistance of rare earth zirconium-based ceramic materials, thereby effectively improving their ionic conductivity. Doping other types of cationic element M at the grain boundary and surface will decrease the sintering activity of rare-earth zirconium-based ceramic materials, thereby refining the grains, pinning the grain boundaries, and improving the mechanical properties of rare-earth zirconium-based ceramic materials, such as fracture toughness, flexural strength, and high-temperature stability. Considering that doping of the cation doping element M over 15 mol% will increase the degree of lattice distortion and affect the ionic conductivity and mechanical properties of the material as well, the molar content of the cation doping element M in the rare-earth zirconium-based ceramic material is also defined in the present invention.

In a second aspect of the present invention, provided is a method for preparing the rare earth zirconium-based ceramic material which is doped at surface and at grain boundary according to the first aspect of the invention, the flowchart of which is shown in FIG. 1, comprising the following steps of:

S1. mixing aqueous solutions of RE and Zr compounds in the stoichiometric ratio required for the product to obtain a mixed feed solution; adding the mixed feed solution and a basic substance to a reactor for carrying out a precipitation reaction, and filtering, washing, drying and calcining the resulting precipitate to obtain a rare earth zirconium-based oxide powder;

S2. mixing the rare earth zirconium-based oxide powder obtained in step S1 with a liquid salt of the doping element M and drying, performing one or two heat treatments and then one or two calcinations to obtain the grain boundary and surface-doped rare earth zirconium-based ceramic powder.

In a third aspect of the present invention, a method for preparing the rare earth zirconium-based ceramic material which is doped at surface and at grain boundary according to the first aspect of the invention is provided, comprising the steps of:

S1. mixing aqueous solutions of RE and Zr and part of M compounds in a stoichiometric ratio required for the product to obtain a mixed feed solution; adding the mixed feed solution and a basic substance to a reactor for carrying out a precipitation reaction, and filtering, washing, drying and calcining the resulting precipitate to obtain a rare earth zirconium-based oxide powder comprising the M element;

S2. mixing the rare earth zirconium-based oxide powder containing the M element obtained in step S1 with the liquid salt of the remaining doping element M, and drying, performing one or two heat treatments and then one or two calcinations to obtain the rare earth zirconium-based ceramic material which is doped at surface and at grain boundary.

In the technical solutions of the above two preparation methods, the Zr-containing solution in step S1 includes one or a combination of more than one aqueous solution of zirconium oxychloride, zirconyl nitrate, zirconyl sulfate, zirconium acetate, and zirconium citrate; the Re-containing aqueous solution in step S1 comprises one or a combination of more than one aqueous solution of chloride, nitrate, sulfate, acetate, and citrate of a rare earth. The basic substance comprises magnesium bicarbonate, urea and at least one selected from hydroxide, carbonate or bicarbonate containing at least one selected from ammonium, sodium and potassium, preferably at least one selected from sodium hydroxide, urea, ammonia and ammonium bicarbonate. pH in the precipitation process in step S1 is controlled to be 4.5 to 14, preferably 5 to 11, and pH at the precipitation endpoint is controlled to be 8 to 13, preferably 9 to 11; and the temperature during the precipitation process is 0 to 120 °C, preferably 10 to 80 °C. The liquid salt of the doping element M comprises one or a combination of one or more molten salt or aqueous solution of nitrate, sulfate, acetate, citrate, and amino acid salt. Among them, M at the grain boundary and surface is in a molar ratio of 10-70 %. The morphology and proportion of M at the grain boundary and surface can be regulated by controlling the precipitation condition, the temperature, time, and atmosphere of heat treatment and calcination, and the like, for the product.

In step S1, the calcination temperature is 600 to 1100 °C, preferably 650 to 950 °C, and the calcination time is 1 to 24 h, preferably 3 to 15 h.

In step S2, the heat treatment temperature is 200 to 750 °C, preferably 400 to 600 °C, further preferably 400 to 550 °C, the heat treatment time is 1 to 24 h, preferably 1 to 12 h; the calcination temperature is 700 to 1200 °C, preferably 800 to 1100 °C, further preferably 900 to 1100 °C, and the obtained rare earth zirconium-based ceramic powders are subjected to one or two calcinations to effectively control their strength and dispersion. After the first calcination, they can be subjected to ball-milling and surface treatment to prevent secondary sintering agglomeration. The doping element can preferentially enter the grain boundary in this temperature range, and fails to enter the grain boundary below this temperature range, and will enter the bulk phase and lead to excessive sintering and a decrease in grain boundaries above this temperature range, with the calcination time from 1 to 24 h, preferably from 3 to 15 h. The morphology and proportion of M at the grain boundary and surface can regulated by controlling the precipitation condition, the temperature, time, and atmosphere of heat treatment and calcination, and the like, for the product. In order to meet the special requirements on the ceramic performance in different applications, there is a need to adjust or change the type of doping elements and the ceramic microstructure, which requires the use of different heat treatment systems, such as step-by-step heat treatment, to introduce more doping elements into the grain boundary and surface more uniformly and stably. Water washing, water quenching and other treatments can also be carried out between the two steps of heat treatment.

The method for preparing the rare earth zirconium-based ceramic material which is doped at surface and at grain boundary of the present invention employs a wet chemical method to obtain a rare earth zirconium-based oxide powder containing the doping element M, which is subjected to heat treatment at a specific temperature, thereby ensuring uniform distribution of the doping element M at the grain boundary and surface of the rare earth zirconium-based oxide powder, thus avoiding local compositional anomalies from adversely affecting the overall performance of the material. Thus, the rare earth zirconium-based ceramic material which is doped at surface and at grain boundarys of the present invention have better properties compared to materials prepared by other methods.

In a fourth aspect of the present invention, provided is use of the rare earth zirconium-based ceramic material which is doped at surface and at grain boundary according to the first aspect of the invention in applications including grinding media, optical fiber connectors, mobile phone backboards, dental materials, biological ceramics, thermal barrier coatings, oxygen sensors or nitrogen-oxygen sensors, and solid oxide fuel cells. The grain boundary and surface-doped rare earth zirconium-based ceramic powders provided by examples of the present invention can be prepared into ceramics by tape casting, hot pressing and other methods, and can be further prepared by structure design into ceramics applied into fields such as grinding media, optical fiber connectors, mobile phone backboards, dental materials, biological ceramics, thermal barrier coatings, oxygen sensors or nitrogen-oxygen sensors, and solid oxide fuel cells.

The present invention will be further described in below with reference to specific embodiments.

Example 1

Yttrium chloride and zirconium oxychloride in a stoichiometric ratio were dissolved in water to formulate a mixed solution of $Y^{3+}$ and $Zr^{4+}$ with a total cation concentration of 1.0 M; the mixed material solution and 2.0 M sodium hydroxide solution were added to a reactor at constant-speed under stirring, and in the precipitation process, the pH value was controlled to be $10.7 \pm 0.2$, the endpoint pH value was 10.5, the temperature was controlled to be 30 °C, such that the cations were precipitated completely; then the precipitate was filtered, washed and dried, and the dried product was calcined at 600 °C for 24 hours to obtain YSZ powder; YSZ was mixed with a liquid salt of lanthanum nitrate in doped La stoichiometric ratio, the mixture was dried at 100 °C for 5 hours, then subjected to heat treatment at 200 °C for 24 hours and another calcination at 1200 °C for 2 hours, to obtain a grain boundary and surface-doped rare earth zirconium-based ceramic powder $Y_{0.05}La_{0.01}Zr_{0.94}O_{1.97}$. After being sintered into ceramics, the flexural strength thereof was measured to be 1378.28 MPa by three-point bending test.

Example 2

Yttrium nitrate and zirconyl nitrate in a stoichiometric ratio were dissolved in water to formulate a mixed solution of $Y^{3+}$ and $Zr^{4+}$ with a concentration of 1.0 M; the mixed material solution and 3.0 M ammonia solution were added to a reactor at constant-speed under stirring, and in the precipitation process, the pH value was controlled to be $7 \pm 0.2$, and the endpoint pH value was 10.5, the temperature was controlled to be 20 °C, such that the cations were precipitated completely; then the precipitate was filtered, washed and dried, and the dried product was calcined at 1000 °C for 2 hours to obtain a YSZ powder; YSZ was mixed with a liquid salt of cerium acetate in doped Ce stoichiometric ratio, the mixture was dried at 100 °C for 5 hours, subjected to heat treatment at 300 °C for 20 hours and another calcination at 700 °C for 24 hours, to obtain a grain boundary and surface-doped rare earth zirconium-based ceramic powder $Y_{0.03}Ce_{0.40}Zr_{0.93}O_{1.965}$. After being sintered into ceramics, the flexural strength thereof was measured to be 1298.02 MPa by three-point bending test.

Example 3

Yttrium chloride and zirconium oxychloride in a stoichiometric ratio were dissolved in water to formulate a mixed solution of $Y^{3+}$ and $Zr^{4+}$ with a concentration of 1.0 M; the mixed material solution and 2.0 M sodium hydroxide solution were added to a reactor at constant-speed under stirring, and the pH value in the precipitation process was controlled to be $5 \pm 0.2$, and the endpoint pH value was 10, the temperature was controlled to be 10 °C, such that the cations were precipitated completely; then the precipitate was filtered, washed and dried, and the dried product was calcined at 800 °C for 6 hours to obtain a YSZ powder; YSZ was mixed with a liquid salt of lanthanum nitrate and lutetium nitrate in doped La and Lu stoichiometric ratio, the mixture was dried at 100 °C for 5 hours, subjected to heat treatment at 350 °C for 20 hours and another calcination at 1100 °C for 4 hours, to obtain a grain boundary and surface-doped rare earth zirconium-based ceramic powder $Y_{0.02}La_{0.02}Lu_{0.02}Zr_{0.94}O_{1.97}$. After being sintered into ceramics, the flexural strength thereof was measured to be 1350 MPa by three-point bending test.

Example 4

Yttrium chloride and zirconium oxychloride in a stoichiometric ratio were dissolved in water to formulate a mixed solution of $Y^{3+}$ and $Zr^{4+}$ with a concentration of 1.0 M; the mixed material solution and 2.0 M sodium hydroxide solution were added to a reactor at constant-speed under stirring, in the precipitation process, the pH value was controlled to be 4.5-11, and the endpoint pH value was 9.5, the temperature was controlled to be 30 °C, such that the cations were precipitated completely; then the precipitate was filtered, washed and dried, and the dried product was calcined at 950 °C for 4 hours to obtain a YSZ powder; YSZ was mixed with a liquid salt of europium nitrate and ytterbium nitrate in doped Eu and Yb stoichiometric ratio, the mixture was dried at 100 °C for 5 hours, subjected to heat treatment at 550 °C for 6 hours and another calcination at 1000 °C for 8 hours, to obtain a grain boundary and surface-doped rare earth zirconium-based ceramic powder $Y_{0.04}Eu_{0.01}Yb_{0.01}Zr_{0.94}O_{1.97}$. After being sintered into ceramics, the flexural strength thereof was measured to be 1310.43 MPa by three-point bending test.

Example 5

Yttrium chloride and zirconium oxychloride in a stoichiometric ratio were dissolved in water to formulate a mixed solution of $Y^{3+}$ and $Zr^{4+}$ with a concentration of 1.0 M; the mixed material solution and 2.0 M sodium hydroxide solution were added to a reactor at constant-speed under stirring, in the precipitation process, the pH value was controlled to be $10.7 \pm 0.2$, the endpoint pH value was 12, the temperature was controlled to be 30 °C, such that the cations were precipitated completely; then the precipitate was filtered, washed and dried, and the dried product was calcined at 1000 °C for 2 hours to obtain a YSZ powder; YSZ was mixed with a liquid salt of aluminium nitrate in doped Al stoichiometric ratio, the mixture was dried at 100 °C for 5 hours, subjected to heat treatment at 450 °C for 2 hours and another calcination at 900 °C for 15 hours, to obtain a grain boundary and surface-doped rare earth zirconium-based ceramic powder $Y_{0.05}Al_{0.01}Zr_{0.94}O_{1.97}$. After being sintered into ceramics, the flexural strength thereof was measured to be 1390.02 MPa by three-point bending test.

Example 6

Yttrium nitrate and zirconyl nitrate in a stoichiometric ratio were dissolved in water to formulate a mixed solution of $Y^{3+}$ and $Zr^{4+}$ with a concentration of 1.0 M; the mixed material solution and 3.0 M ammonia solution were added to a reactor at constant-speed under stirring, in the precipitation process, the pH value was controlled to be $9\pm0.2$, the endpoint pH value was 10, the temperature was controlled to be 20 °C, such that the cations were precipitated completely; then the precipitate was filtered, washed and dried, and the dried product was calcined at 600 °C for 24 hours to obtain a YSZ powder; YSZ was mixed with a liquid salt of erbium oxide in doped Er stoichiometric ratio, the mixture was dried at 100 °C for 5 hours, subjected to heat treatment at 400 °C for 12 hours and another calcination at 1200 °C for 2 hours, to obtain a grain boundary and surface-doped rare earth zirconium-based ceramic powder $Y_{0.09}Er_{0.01}Zr_{0.9}O_{1.95}$. After being sintered into ceramics, the flexural strength thereof was measured to be 570.45 MPa by three-point bending test, and the electrical conductivity thereof was measured to be 32.78 mS/cm at 850 °C by DC four-point probe method.

Example 7

Yttrium nitrate and zirconyl nitrate in a stoichiometric ratio were dissolved in water to formulate a mixed solution of $Y^{3+}$ and $Zr^{4+}$ with a concentration of 1.0 M; the mixed material solution and an ammonia solution were added to a reactor at constant-speed under stirring, in the precipitation process, the pH value was controlled to be $8\pm0.2$, and the endpoint pH value was 9, the temperature was controlled to be 10 °C, such that the cations were precipitated completely; then the precipitate was filtered, washed and dried, and the dried product was calcined at 1000 °C for 2 hours to obtain a YSZ powder; YSZ was mixed with a liquid salt of scandium nitrate in doped Sc stoichiometric ratio, the mixture was dried at 100 °C for 5 hours, subjected to heat treatment at 500 °C for 6 hours and another calcination at 900 °C for 15 hours, to obtain a grain boundary and surface-doped rare earth zirconium-based ceramic powder $Y_{0.05}Sc_{0.1}Zr_{0.85}O_{1.925}$. After being sintered into ceramics, the flexural strength thereof was measured to be 615.22 MPa by three-point bending test, and the electrical conductivity thereof was measured to be 40.67 mS/cm at 850 °C by DC four-point probe method.

Example 8

Yttrium nitrate and zirconyl nitrate in a stoichiometric ratio were dissolved in water to formulate a mixed solution of $Y^{3+}$ and $Zr^{4+}$ with a concentration of 1.0 M; the mixed material solution and an ammonia solution were added to a reactor at constant-speed under stirring, in the precipitation process, the pH value was controlled to be $8.5\pm0.2$, the endpoint pH value was 9, the temperature was controlled to be 20 °C, such that the cations were precipitated completely; then the precipitate was filtered, washed and dried, and the dried product was calcined at 650 °C for 15 hours to obtain a YSZ powder; YSZ was mixed with a liquid salt of ytterbium nitrate and lutetium nitrate in doped Yb and Lu stoichiometric ratio, the mixture was dried at 100 °C for 5 hours, subjected to heat treatment at 500 °C for 6 hours and another calcination at 750 °C for 20 hours, to obtain a grain boundary and surface-doped rare earth zirconium-based ceramic powder $Y_{0.07}Yb_{0.02}Lu_{0.02}Zr_{0.9}O_{1.945}$. After being sintered into ceramics, the flexural strength thereof was measured to be 600 MPa by three-point bending test, and the electrical conductivity thereof was measured to be 34.83 mS/cm at 850 °C by DC four-point probe method.

Example 9

Yttrium nitrate and zirconyl nitrate in a stoichiometric ratio were dissolved in water to formulate a mixed solution of $Y^{3+}$ and $Zr^{4+}$ with a concentration of 1.0 M; the mixed material solution and an ammonia solution were added to a reactor at constant-speed under stirring, in the precipitation process, the pH value was controlled to be $9\pm0.2$, the endpoint pH value was 9.5, the temperature was controlled to be 20 °C, such that the cations were precipitated completely; then the precipitate was filtered, washed and dried, and the dried product was calcined at 1000 °C for 2 hours to obtain a YSZ powder; YSZ was mixed with a liquid salt of lutetium nitrate in doped Lu stoichiometric ratio, the mixture was dried at 100 °C for 5 hours, subjected to heat treatment at 550 °C for 3 hours and another calcination at 1000 °C for 8 hours, to obtain a grain boundary and surface-doped rare earth zirconium-based ceramic powder $Y_{0.09}Lu_{0.01}Zr_{0.9}O_{1.95}$. After being sintered into ceramics, the flexural strength thereof was measured to be 590.62 MPa by three-point bending test, and the electrical conductivity thereof was measured to be 33.01 mS/cm at 850 °C by DC four-point probe method.

Example 10

Yttrium nitrate and zirconyl nitrate in a stoichiometric ratio were dissolved in water to formulate a mixed solution of $Y^{3+}$ and $Zr^{4+}$ with a concentration of 1.0 M; the mixed material solution and an ammonia solution were added to a reactor at constant-speed under stirring, in the precipitation process, the pH value was controlled to be $6\pm0.2$, the endpoint pH value was 9.5, the temperature was controlled to be 20 °C, such that the cations were precipitated completely; then the precipitate was filtered, washed and dried, and the dried product was calcined at 1000 °C for 2 hours to obtain a YSZ powder; YSZ was mixed with a liquid salt of scandium nitrate in doped Sc stoichiometric ratio, the mixture was dried at 100 °C for 5 hours, subjected to heat treatment at 475 °C for 12 hours, calcination at 900 °C for 10 hours and another calcination at 1000 °C for 5 hours, to obtain a grain boundary and surface-doped rare earth zirconium-based ceramic powder $Y_{0.08}Sc_{0.02}Zr_{0.9}O_{1.95}$. After being sintered into ceramics, the flexural strength thereof was measured to be 610.54 MPa by three-point bending test, and the electrical conductivity thereof was measured to be 35.70 mS/cm at 850 °C by DC four-point probe method.

Example 11

Yttrium nitrate and zirconyl nitrate in a stoichiometric ratio were dissolved in water to formulate a mixed solution of $Y^{3+}$ and $Zr^{4+}$ with a concentration of 1.0 M; the mixed material solution and an ammonia solution were added to a reactor at constant-speed under stirring, and the pH value in the precipitation process was controlled to be $8\pm0.2$, and the endpoint pH value was 9, the temperature was controlled to be 20 °C, such that the cations were precipitated completely; then the precipitate was filtered, washed and dried, and the dried product was calcined at 700 °C for 8 hours to obtain a YSZ powder; YSZ was mixed with a liquid salt of ytterbium nitrate and lutetium nitrate in doped Yb and Lu stoichiometric ratio, the mixture was dried at 100 °C for 5 hours, subjected to heat treatment at 525 °C for 15 hours, calcination at 500 °C for 3 hours and another calcination at 1000 °C for 8 hours, to obtain a grain boundary and surface-doped rare earth zirconium-based ceramic powder $Y_{0.05}Yb_{0.03}Lu_{0.03}Zr_{0.89}O_{1.945}$. After being sintered into ceramics, the flexural strength thereof was measured to be 605.22 MPa by three-point bending test, and the electrical conductivity thereof was measured to be 38.67 mS/cm at 850 °C by DC four-point probe method.

Example 12

Yttrium nitrate and zirconyl nitrate in a stoichiometric ratio were dissolved in water to formulate a mixed solution of $Y^{3+}$ and $Zr^{4+}$ with a concentration of 1.0 M; the mixed material solution and an ammonia solution were added to a reactor at constant-speed under stirring, and the pH value in the precipitation process was controlled to be 9-12, and the endpoint pH value was 9, the temperature was controlled to be 10 °C, such that the cations were precipitated completely; then the precipitate was filtered, washed and dried, and the dried product was calcined at 1000 °C for 2 hours to obtain a YSZ powder; YSZ was mixed with a liquid salt of scandium nitrate and samarium nitrate in doped Sc and Sm stoichiometric ratio, the mixture was dried at 100 °C for 5 hours, subjected to heat treatment at 300 °C for 10 hours, another heat treatment at 575 °C for 4 hours, calcination at 800 °C for 15 hours, and another calcination at 1100 °C for 3 hours, to obtain a grain boundary and surface-doped rare earth zirconium-based ceramic powder $Y_{0.06}Sc_{0.03}Sm_{0.01}Zr_{0.9}O_{1.95}$. After being sintered into ceramics, the flexural strength thereof was measured to be 625.24 MPa by three-point bending test, and the electrical conductivity thereof was measured to be 36.83 mS/cm at 850 °C by DC four-point probe method.

Example 13

Yttrium chloride and zirconium oxychloride in a stoichiometric ratio were dissolved in water to formulate a mixed solution of $Y^{3+}$ and $Zr^{4+}$ with a concentration of 1.0 M; the mixed material solution and sodium carbonate solution were added to a reactor at constant-speed under stirring, in the precipitation process, the pH value was controlled to be $8.5\pm0.2$, the endpoint pH value was 9, the temperature was controlled to be 30 °C, such that the cations were precipitated completely; then the precipitate was filtered, washed and dried, and the dried product was calcined at 700 °C for 8 hours to obtain a YSZ powder; YSZ was mixed with a liquid salt of strontium nitrate in doped Sr stoichiometric ratio, the mixture was dried at 100 °C for 5 hours, subjected to heat treatment at 600 °C for 3 hours and another calcination at 1000 °C for 8 hours, to obtain a grain boundary and surface-doped rare earth zirconium-based ceramic powder $Y_{0.13}Sr_{0.03}Zr_{0.85}O_{1.915}$. After being sintered into ceramics, the flexural strength thereof was measured to be 389.93 MPa by three-point bending test, and the electrical conductivity thereof was measured to be 81.34 mS/cm at 850 °C by DC four-point probe method.

Example 14

Yttrium chloride and zirconium oxychloride in a stoichiometric ratio were dissolved in water to formulate a mixed solution of $Y^{3+}$ and $Zr^{4+}$ with a concentration of 1.0 M; the mixed material solution and 2.0 M sodium hydroxide solution were added to a reactor at constant-speed under stirring, in the precipitation process, the pH value was controlled to be $5.5\pm0.2$, the endpoint pH value was 13, the temperature was controlled to be 60 °C, such that the cations were precipitated completely; then the precipitate was filtered, washed and dried, and the dried product was calcined at 1000 °C for 2 hours to obtain a YSZ powder; YSZ was mixed with a liquid salt of bismuth nitrate in doped Bi stoichiometric ratio, the mixture was dried at 100 °C for 5 hours, subjected to heat treatment at 575 °C for 6 hours and another calcination at 1000 °C for 8 hours, to obtain a grain boundary and surface-doped rare earth zirconium-based ceramic powder $Y_{0.1}Bi_{0.03}Zr_{0.85}O_{1.925}$. After being sintered into ceramics, the flexural strength thereof was measured to be 400 MPa by three-point bending test, and the electrical conductivity thereof was measured to be 97.09 mS/cm at 850 °C by DC four-point probe method.

Example 15

Yttrium chloride and zirconium oxychloride in a stoichiometric ratio were dissolved in water to formulate a mixed solution of $Y^{3+}$ and $Zr^{4+}$ with a concentration of 1.0 M; the mixed material solution and 2.0 M sodium hydroxide solution were added to a reactor at constant-speed under stirring, in the precipitation process, the pH value was controlled to be 5-11, the endpoint pH value was 9.5, the temperature was controlled to be 80 °C, such that the cations were precipitated completely; then the precipitate was filtered, washed and dried, and the dried product was calcined at 800 °C for 24 hours to obtain a YSZ powder; YSZ was mixed with a liquid salt of ytterbium nitrate and aluminum nitrate in doped Yb and Al stoichiometric ratio, the mixture was dried at 100 °C for 5 hours, subjected to heat treatment at 500 °C for 6 hours and another calcination at 750 °C for 4 hours, to obtain a grain boundary and surface-doped rare earth zirconium-based ceramic powder $Y_{0.12}Yb_{0.03}Al_{0.01}Zr_{0.84}O_{1.92}$. After being sintered into ceramics, the flexural strength thereof was measured to be 420.82 MPa by three-point bending test, and the electrical conductivity thereof was measured to be 85.98 mS/cm at 850 °C by DC four-point probe method.

Example 16

Yttrium nitrate and zirconyl nitrate in a stoichiometric ratio were dissolved in water to formulate a mixed solution of $Y^{3+}$ and $Zr^{4+}$ with a concentration of 1.0 M; the mixed material solution and 3.0 M ammonia solution were added to a reactor at constant-speed under stirring, in the precipitation process, the pH value was controlled to be 7±0.2, the endpoint pH value was 11, the temperature was controlled to be 10 °C, such that the cations were precipitated completely; then the precipitate was filtered, washed and dried, and the dried product was calcined at 800 °C for 6 hours to obtain a YSZ powder; YSZ was mixed with a liquid salt of bismuth nitrate, ytterbium nitrate and aluminum nitrate in doped Bi, Yb and Al stoichiometric ratio, the mixture was dried at 100 °C for 5 hours, subjected to heat treatment at 500 °C for 6 hours and another calcination at 1000 °C for 8 hours, to obtain a grain boundary and surface-doped rare earth zirconium-based ceramic powder $Y_{0.07}Bi_{0.03}Yb_{0.02}Al_{0.01}Zr_{0.85}O_{1.925}$. After being sintered into ceramics, the flexural strength thereof was measured to be 415.05 MPa by three-point bending test, and the electrical conductivity thereof was measured to be 90.00 mS/cm at 850 °C by DC four-point probe method.

Example 17

Yttrium nitrate and zirconyl nitrate in a stoichiometric ratio were dissolved in water to formulate a mixed solution of $Y^{3+}$ and $Zr^{4+}$ with a concentration of 1.0 M; the mixed material solution and 3.0 M ammonia solution were added to a reactor at constant-speed under stirring, in the precipitation process, the pH value was controlled to be 7±0.2, the endpoint pH value was 9.5, the temperature was controlled to be 30 °C, such that the cations were precipitated completely; then the precipitate was filtered, washed and dried, and the dried product was calcined at 600 °C for 24 hours to obtain a YSZ powder; YSZ was mixed with a liquid salt of vanadium nitrate in doped V stoichiometric ratio, the mixture was dried at 100 °C for 5 hours, subjected to heat treatment at 500 °C for 3 hours and another calcination at 1100 °C for 4 hours, to obtain a grain boundary and surface-doped rare earth zirconium-based ceramic powder $Y_{0.1}V_{0.03}Zr_{0.85}O_{1.925}$. After being sintered into ceramics, the flexural strength thereof was measured to be 400.79 MPa by three-point bending test, and the electrical conductivity thereof was measured to be 73.65 mS/cm at 850 °C by DC four-point probe method.

Example 18

Scandium nitrate and zirconyl nitrate in a stoichiometric ratio were dissolved in water to formulate a mixed solution of $Sc^{3+}$ and $Zr^{4+}$ with a concentration of 1.0 M; the mixed material solution and 3.0 M ammonia solution were added to a reactor at constant-speed under stirring, in the precipitation process, the pH value was controlled to be 5.5±0.2, the endpoint pH value was 8, the temperature was controlled to be 30 °C, such that the cations were precipitated completely; then the precipitate was filtered, washed and dried, and the dried product was calcined at 1000 °C for 2 hours to obtain a an ScSZ powder; ScSZ was mixed with a liquid salt of ytterbium nitrate in doped Yb stoichiometric ratio, the mixture was dried at 100 °C for 5 hours, subjected to heat treatment at 425 °C for 6 hours and another calcination at 900 °C for 15 hours, to obtain a grain boundary and surface-doped rare earth zirconium-based ceramic powder $Sc_{0.14}Yb_{0.04}Zr_{0.82}O_{1.91}$. After being sintered into ceramics, the electrical conductivity thereof was measured to be 190.88 mS/cm at 850 °C by DC four-point probe method.

Example 19

Scandium nitrate and zirconyl nitrate in a stoichiometric ratio were dissolved in water to formulate a mixed solution of $Sc^{3+}$ and $Zr^{4+}$ with a concentration of 1.0 M; the mixed material solution and 3.0 M ammonia solution were added to a reactor at constant-speed under stirring, in the precipitation process, the pH value was controlled to be 5.5±0.2, and the endpoint pH value was 9, the temperature was controlled to be 30 °C, such that the cations were precipitated completely; then the precipitate was filtered, washed and dried, and the dried product was calcined at 1000 °C for 2 hours to obtain an ScSZ powder; ScSZ was mixed with a liquid salt of cerous nitrate in doped Ce stoichiometric ratio, the mixture was dried at 100 °C for 5 hours, subjected to heat treatment at 500 °C for 6 hours and another calcination at 850 °C for 15 hours, to obtain a grain boundary and surface-doped rare earth zirconium-based ceramic powder $Sc_{0.14}Ce_{0.03}Zr_{0.82}O_{1.91}$. After being sintered into ceramics, the electrical conductivity thereof was measured to be 185.72 mS/cm at 850 °C by DC four-point probe method.

Example 20

Yttrium chloride and zirconium oxychloride in a stoichiometric ratio were dissolved in water to formulate a mixed solution of $Y^{3+}$ and $Zr^{4+}$ with a concentration of 1.0 M; the mixed material solution and 2.0 M sodium hydroxide solution were added to a reactor at constant-speed under stirring, in the precipitation process, the pH value was controlled to be 10-14, the endpoint pH value was 9.5, the temperature was controlled to be 60 °C, such that the cations were precipitated completely; then the precipitate was filtered, washed and dried, and the dried product was calcined at 650 °C for 15 hours to obtain a YSZ powder; YSZ was mixed with a liquid salt of trinickel dicitrate in doped Ni stoichiometric ratio, the mixture was dried at 100 °C for 5 hours, subjected to heat treatment at 400 °C for 12 hours and another calcination at 900 °C for 15 hours, to obtain a grain boundary and surface-doped rare earth zirconium-based ceramic powder $Y_{0.05}Ni_{0.03}Zr_{0.92}O_{1.96}$. After being sintered into ceramics, the phase analysis showed that the phase structure thereof could remain stable below 1200 °C. The fracture toughness was measured to be 2.94 MPa·m$^{1/2}$ by indentation method. After being thermally sprayed, it underwent thermal shock cycle test with 248 thermal shock cycles. (The thermal shock test involves heating and holding the sample in a box furnace at 1150 °C for 50 minutes, then removing it and allowing it to cool in room temperature air for 10 minutes. This process is repeated many times until the coating peels off the substrate to an area of 10%, at which point the sample is considered failed. The following thermal shock test is the same as this example).

Example 21

Yttrium chloride and zirconium oxychloride in a stoichiometric ratio were dissolved in water to formulate a mixed solution of $Y^{3+}$ and $Zr^{4+}$ with a concentration of 1.0 M; the mixed material solution and 2.0 M sodium hydroxide solution were added to a reactor at constant-speed under stirring, in the precipitation process, the pH value was controlled to be 10±0.2, the endpoint pH value was 10.5, the temperature was controlled to be 20 °C, such that the cations were precipitated completely; then the precipitate was filtered, washed and dried, and the dried product was calcined at 1000 °C for 2 hours to obtain a YSZ powder; YSZ was mixed with a liquid salt of zinc acetate in doped Zn stoichiometric ratio, the mixture was dried at 100 °C for 5 hours, subjected to heat treatment at 400 °C for 12 hours and another calcination at 900 °C for 15 hours, to obtain a grain boundary and surface-doped rare earth zirconium-based ceramic powder $Y_{0.05}Zn_{0.03}Zr_{0.92}O_{1.96}$. After being sintered into ceramics, the phase analysis showed that the phase structure thereof could remain stable below 1200 °C. The fracture toughness was measured to be 2.88 MPa·m$^{1/2}$ by indentation method. After being thermally sprayed, it underwent thermal shock cycle test, with 256 thermal shock cycles.

Example 22

Yttrium chloride and zirconium oxychloride in a stoichiometric ratio were dissolved in water to formulate a mixed solution of $Y^{3+}$ and $Zr^{4+}$ with a concentration of 1.0 M; the mixed material solution and magnesium bicarbonate solution were added to a reactor at constant-speed under stirring, in the precipitation process, the pH value was controlled to be 4.7±0.2, and the endpoint pH value was 8.5, the temperature was controlled to be 20 °C, such that the cations were precipitated completely; then the precipitate was filtered, washed and dried, and the dried product was calcined at 1000 °C for 2 hours to obtain a YSZ powder; YSZ was mixed with a liquid salt of magnesium nitrate in doped Mg stoichiometric ratio, the mixture was dried at 100 °C for 5 hours, subjected to heat treatment at 300 °C for 20 hours and another calcination at 800 °C for 17 hours, to obtain a grain boundary and surface-doped rare earth zirconium-based ceramic powder $Y_{0.05}Mg_{0.03}Zr_{0.92}O_{1.825}$. After being sintered into ceramics, the phase analysis showed that the phase structure thereof could remain stable below 1200 °C. The fracture toughness was measured to be 3.03 MPa·m$^{1/2}$ by indentation method. After being thermally sprayed, it underwent thermal shock cycle test with 320 thermal shock cycles.

Example 23

Yttrium nitrate and zirconyl nitrate in a stoichiometric ratio were dissolved in water to formulate a mixed solution of $Y^{3+}$ and $Zr^{4+}$ with a concentration of 1.0 M; the mixed material solution and 3.0 M ammonia solution were added to a reactor at constant-speed under stirring, in the precipitation process, the pH value was controlled to be 7±0.2, the endpoint pH value was 10, the temperature was controlled to be 10 °C, such that the cations were precipitated completely; then the precipitate was filtered, washed and dried, and the dried product was calcined at 800 °C for 6 hours to obtain a YSZ powder;

YSZ was mixed with a liquid salt of aluminum nitrate and samarium nitrate in doped Al and Sm stoichiometric ratio, the mixture was dried at 100 °C for 5 hours, subjected to heat treatment at 400 °C for 12 hours and another calcination at 1050 °C for 2 hours, to obtain a grain boundary and surface-doped rare earth zirconium-based ceramic powder $Y_{0.05}Sm_{0.02}Al_{0.01}Zr_{0.92}O_{1.96}$. After being sintered into ceramics, the phase analysis showed that the phase structure thereof could remain stable below 1200 °C. The fracture toughness was measured to be 2.12 $MPa \cdot m^{1/2}$ by indentation method. After being thermally sprayed, it underwent thermal shock cycle test with 417 thermal shock cycles.

Example 24

Yttrium nitrate and zirconyl nitrate in a stoichiometric ratio were dissolved in water to formulate a mixed solution of $Y^{3+}$ and $Zr^{4+}$ with a concentration of 1.0 M; the mixed material solution and 3.0 M ammonia solution were added to a reactor at constant-speed under stirring, in the precipitation process, the pH value was controlled to be $6 \pm 0.2$, the endpoint pH value was 11, the temperature was controlled to be 30 °C, such that the cations were precipitated completely; then the precipitate was filtered, washed and dried, and the dried product was calcined at 950 °C for 4 hours to obtain a YSZ powder; YSZ was mixed with a liquid salt of praseodymium nitrate in doped Pr stoichiometric ratio, the mixture was dried at 100 °C for 5 hours, subjected to heat treatment at 550 °C for 12 hours and another calcination at 1150 °C for 2 hours, to obtain a grain boundary and surface-doped rare earth zirconium-based ceramic powder $Y_{0.04}Pr_{0.04}Zr_{0.92}O_{1.973}$. After being sintered into ceramics, the phase analysis showed that the phase structure thereof could remain stable below 1200 °C. The fracture toughness was measured to be 2.50 $MPa \cdot m^{1/2}$ by indentation method. After being thermally sprayed, it underwent thermal shock cycle test with 301 thermal shock cycles.

Example 25

Yttrium nitrate and zirconyl nitrate in stoichiometric ratio were dissolved in water to formulate a mixed solution of $Y^{3+}$ and $Zr^{4+}$ with a concentration of 1.0 M; the mixed material solution and 3.0 M ammonia solution were added to a reactor at constant-speed under stirring, in the precipitation process, the pH value was controlled to be $8.5 \pm 0.2$, the endpoint pH value was 9.5, the temperature was controlled to be 30 °C, such that the cations were precipitated completely; then the precipitate was filtered, washed and dried, and the dried product was calcined at 600 °C for 24 hours to obtain a YSZ powder; YSZ was mixed with a liquid salt of neodymium nitrate and gadolinium nitrate in doped Ne and Gd stoichiometric ratio, the mixture was dried at 100 °C for 5 hours, subjected to heat treatment at 400 °C for 12 hours and another calcination at 1200 °C for 2 hours, to obtain a grain boundary and surface-doped rare earth zirconium-based ceramic powder $Y_{0.06}Nd_{0.02}Gd_{0.02}Zr_{0.9}O_{1.95}$. After being sintered into ceramics, the phase analysis showed that the phase structure thereof could remain stable below 1200 °C. The fracture toughness was measured to be 2.86 $MPa \cdot m^{1/2}$ by indentation method. After being thermally sprayed, it underwent thermal shock cycle test with 450 thermal shock cycles.

Example 26

Lanthanum nitrate and zirconyl nitrate in a stoichiometric ratio were dissolved in water to formulate a mixed solution of $La^{3+}$ and $Zr^{4+}$ with a concentration of 0.5 M; the mixed material solution and an ammonia solution were added to a reactor at constant-speed under stirring, in the precipitation process, the pH value was controlled to be $6 \pm 0.2$, the endpoint pH value was 9.5, the temperature was controlled to be 50 °C, such that the cations were precipitated completely; then the precipitate was filtered, washed and dried, and the dried product was calcined at 1000 °C for 2 hours to obtain a LaZO powder; the LaZO powder was mixed with a liquid salt of scandium nitrate in doped Sc stoichiometric ratio, the mixture was dried at 100 °C for 5 hours, subjected to heat treatment at 400 °C for 12 hours and another calcination at 950 °C for 10 hours, to obtain a grain boundary and surface-doped rare earth zirconium-based ceramic powder $La_{0.34}Sc_{0.1}Zr_{0.55}O_{1.725}$. After being sintered into ceramics, the phase analysis showed that the phase structure thereof could remain stable below 1500 °C. The fracture toughness was measured to be 1.39 $MPa \cdot m^{1/2}$ by indentation method. After being thermally sprayed, it underwent thermal shock cycle test with 39 thermal shock cycles.

Example 27

Gadolinium nitrate and zirconyl nitrate in a stoichiometric ratio were dissolved in water to formulate a mixed solution of $Gd^{3+}$ and $Zr^{4+}$ with a concentration of 1.5 M; the mixed material solution and an ammonia solution were added to a reactor at constant-speed under stirring, and in the precipitation process, the pH value was controlled to be $6 \pm 0.2$, the endpoint pH value was 9.5, the temperature was controlled to be 50 °C, such that the cations were precipitated completely; then the precipitate was filtered, washed and dried, and the dried product was calcined at 900 °C for 5 hours to obtain a GdZO powder; GdZO was mixed with a liquid salt of ytterbium nitrate in doped Yb stoichiometric ratio, the mixture was dried at 100 °C for 5 hours, subjected to heat treatment at 400 °C for 5 hours and another calcination at 950 °C for 10 hours, to obtain a grain boundary and surface-doped rare earth zirconium-based ceramic powder $Gd_{0.28}Yb_{0.15}Zr_{0.57}O_{1.71}$. After being sintered into ceramics, the phase analysis showed that the phase structure thereof could remain stable below 1500 °C. The fracture toughness was measured to be 2.56 MPa·m$^{1/2}$ by indentation method. After being thermally sprayed, it underwent thermal shock cycle test with 109 thermal shock cycles.

Example 28

Gadolinium nitrate and zirconyl nitrate in a stoichiometric ratio were dissolved in water to formulate a mixed solution of $Gd^{3+}$ and $Zr^{4+}$ with a concentration of 2.0 M; the mixed material solution and an ammonia solution were added to a reactor at constant-speed under stirring, and in the precipitation process, the pH value was controlled to be $6\pm0.2$, the endpoint pH value was 9.5, the temperature was controlled to be 50 °C, such that the cations were precipitated completely; then the precipitate was filtered, washed and dried, and the dried product was calcined at 900 °C for 5 hours to obtain a GdZO powder; GdZO was mixed with a liquid salt of ytterbium nitrate in doped Yb stoichiometric ratio, the mixture was dried at 100 °C for 5 hours, subjected to heat treatment at 400 °C for 12 hours and another calcination at 950 °C for 10 hours, to obtain a grain boundary and surface-doped rare earth zirconium-based ceramic powder $Gd_{0.46}Yb_{0.05}Zr_{0.5}O_{1.725}$. After being sintered into ceramics, the phase analysis showed that the phase structure thereof could remain stable below 1500 °C. The fracture toughness was measured to be 1.59 MPa·m$^{1/2}$ by indentation method. After being thermally sprayed, it underwent thermal shock cycle test, with 41 thermal shock cycles.

Example 29

Gadolinium nitrate and zirconyl nitrate in a stoichiometric ratio were dissolved in water to formulate a mixed solution of $Gd^{3+}$ and $Zr^{4+}$ with a concentration of 2.0 M; the mixed material solution and an ammonia solution were added to a reactor at constant-speed under stirring, and in the precipitation process, the pH value was controlled to be $5\pm10$, the endpoint pH value was 9.5, the temperature was controlled to be 30 °C, such that the cations were precipitated completely; then the precipitate was filtered, washed and dried, and the dried product was calcined at 900 °C for 24 hours to obtain a GdZO powder; GdZO was mixed with a liquid salt of ytterbium nitrate and yttrium nitrate in doped Yb and Y stoichiometric ratio, the mixture was dried at 100 °C for 5 hours, subjected to heat treatment at 400 °C for 12 hours and another calcination at 1200 °C for 2 hours, to obtain a grain boundary and surface-doped rare earth zirconium-based ceramic powder $Gd_{0.4}Yb_{0.05}Y_{0.05}Zr_{0.5}O_{1.75}$. After being sintered into ceramics, the phase analysis showed that the phase structure thereof could remain stable below 1500 °C. The fracture toughness was measured to be 1.72 MPa·m$^{1/2}$ by indentation method. After being thermally sprayed, it underwent thermal shock cycle test with 49 thermal shock cycles.

Comparative Example 1

Yttrium chloride, lanthanum nitrate, and zirconium oxychloride in a stoichiometric ratio were dissolved in water to formulate a mixed solution of $Y^{3+}$, $La^{3+}$ and $Zr^{4+}$ with a total cation concentration of 1.0 M; the mixed material solution and 2.0 M sodium hydroxide solution were added to a reactor at constant-speed under stirring, and in the precipitation process, the pH value was controlled to be $10.7\pm0.2$, the endpoint pH value was 10.5, the temperature was controlled to be 30 °C, such that the cations were precipitated completely; then the precipitate was filtered, washed and dried, and the dried product was calcined at 600 °C for 24 hours to obtain a YSZ powder; the YSZ powder underwent another calcination at 1200 °C for 2 hours, to obtain a rare earth zirconium-based ceramic powder $Y_{0.05}La_{0.01}Zr_{0.94}O_{1.97}$. After being sintered into ceramics, the flexural strength thereof was measured to be 1035.71 MPa by three-point bending test.

Comparative Example 2

Yttrium chloride, scandium nitrate and zirconium oxychloride in a stoichiometric ratio were dissolved in water to formulate a mixed solution of $Y^{3+}$, $Sc^{3+}$ and $Zr^{4+}$ with a total cation concentration of 1.0 M; the mixed material solution and 3.0 M ammonia solution were added to a reactor at constant-speed under stirring, and in the precipitation process, the pH value was controlled to be $5\pm0.2$, the endpoint pH value was 10, the temperature was controlled to be 10 °C, such that the cations were precipitated completely; then the precipitate was filtered, washed and dried, and the dried product was calcined at 800 °C for 6 hours to obtain a YSZ powder; the YSZ powder underwent another calcination at 1100 °C for 4 hours, to obtain a rare earth zirconium-based ceramic powder $Y_{0.05}Sc_{0.05}Zr_{0.9}O_{1.95}$. After being sintered into ceramics, the flexural strength thereof was measured to be 520.23 MPa by three-point bending test, and the electrical conductivity thereof was measured to be 30.45 mS/cm at 850 °C by DC four-point probe method.

Comparative Example 3

Yttrium chloride, bismuth nitrate and zirconium oxychloride in stoichiometric ratio were dissolved in water to formulate a mixed solution of $Y^{3+}$, $Bi^{3+}$ and $Zr^{4+}$ with a total cation concentration of 1.0 M; the mixed material solution and 2.0 M sodium hydroxide solution were added to a reactor at constant-speed under stirring, and in the precipitation process, the pH value was controlled to be $5.5\pm0.2$, the endpoint pH value was 13, the temperature was controlled to be 60 °C, such that the cations were precipitated completely; then the precipitate was filtered, washed and dried, and the dried product was calcined at 1000 °C for 2 hours to obtain a YSZ powder; the YSZ powder underwent another calcination at 1000 °C for 8 hours, to obtain a rare earth zirconium-based ceramic powder $Y_{0.1}Bi_{0.03}Zr_{0.85}O_{1.925}$. After being sintered into ceramics, the flexural strength thereof was measured to be 353.49 MPa by three-point bending test, and the electrical conductivity thereof was measured to be 71.20 mS/cm at 850 °C by DC four-point probe method.

Comparative Example 4

Scandium nitrate, ytterbium nitrate and zirconyl nitrate in a stoichiometric ratio were dissolved in water to formulate a mixed solution of $Sc^{3+}$, $Yb^{3+}$ and $Zr^{4+}$ with a total cation concentration of 1.10 M; the mixed material solution and 3.0 M ammonia solution were added to a reactor at constant-speed under stirring, and in the precipitation process, the pH value was controlled to be $5.5\pm0.2$, the endpoint pH value was 9, the temperature was controlled to be 30 °C, such that the cations were precipitated completely; then the precipitate was filtered, washed and dried, and the dried product was calcined at 1000 °C for 2 hours to obtain a ScSZ powder; the ScSZ powder underwent another calcination at 900 °C for 15 hours to obtain a rare earth zirconium-based ceramic powder $Sc_{0.14}Yb_{0.04}Zr_{0.82}O_{1.91}$. After being sintered into ceramics, the electrical conductivity thereof was measured to be 165.23 mS/cm at 850 °C by DC four-point probe method.

Comparative Example 5

Yttrium chloride, magnesium nitrate and zirconium oxychloride in a stoichiometric ratio were dissolved in water to formulate a mixed solution of $Y^{3+}$, $Mg^{2+}$ and $Zr^{4+}$ with a total cation concentration of 1.0 M; the mixed material solution and a magnesium bicarbonate solution were added to a reactor at constant-speed under stirring, and in the precipitation process, the pH value was controlled to be $4.7\pm0.2$, the endpoint pH value was 8.5, the temperature was controlled to be 20 °C, such that the cations were precipitated completely; then the precipitate was filtered, washed and dried, and the dried product was calcined at 800 °C for 2 hours to obtain a YSZ powder; the YSZ powder underwent another calcination at 1000 °C for 17 hours, to obtain a rare earth zirconium-based ceramic powder $Y_{0.05}Mg_{0.03}Zr_{0.92}O_{1.96}$. After being sintered into ceramics, the phase analysis showed that the phase structure thereof could remain stable below 1200 °C. The fracture toughness was measured to be 2.76 MPa·m$^{1/2}$ by indentation method. After being thermally sprayed, it underwent thermal shock cycle test with 250 thermal shock cycles.

Comparative Example 6

Lanthanum nitrate, scandium nitrate and zirconyl nitrate in a stoichiometric ratio were dissolved in water to formulate a mixed solution of $La^{3+}$, $Sc^{3+}$ and $Zr^{4+}$ with a total cation concentration of 0.5 M; the mixed material solution and an ammonia solution were added to a reactor at constant-speed under stirring, and in the precipitation process, the pH value was controlled to be $6\pm0.2$, the endpoint pH value was 9.5, the temperature was controlled to be 50 °C, such that the cations were precipitated completely; then the precipitate was filtered, washed and dried, and the dried product was calcined at 1000 °C for 2 hours to obtain a LaZO powder; the LaZO powder underwent another calcination at 950 °C for 10 hours, to obtain a rare earth zirconium-based ceramic powder $La_{0.4}Sc_{0.1}Zr_{0.5}O_{1.75}$. After being sintered into ceramics, the phase analysis showed that the phase structure thereof could remain stable below 1500 °C. The fracture toughness was measured to be 1.12 MPa·m$^{1/2}$ by indentation method. After being thermally sprayed, it underwent thermal shock cycle test, with 30 thermal shock cycles.

Comparative Example 7

Yttrium chloride and zirconium oxychloride in a stoichiometric ratio were dissolved in water to formulate a mixed solution of $Y^{3+}$ and $Zr^{4+}$ with a total cation concentration of 1.0 M; the mixed material solution and 2.0 M sodium hydroxide solution were added to a reactor at constant-speed under stirring, and in the precipitation process, the pH value was controlled to be $10.7\pm0.2$, the endpoint pH value was 10.5, the temperature was controlled to be 30 °C, such that the cations were precipitated completely; then the precipitate was filtered, washed and dried, and the dried product was calcined at 600 °C for 24 hours to obtain a YSZ powder; YSZ and lanthanum oxide in a stoichiometric ratio were mixed in ethylene glycol with ball milling, then subjected to another calcination at 1200 °C for 2 hours, to obtain a rare earth zirconium-based ceramic powder $Y_{0.05}La_{0.01}Zr_{0.94}O_{1.97}$. After being sintered into ceramics, the flexural strength thereof was measured to be 987.21 MPa by three-point bending test.

Comparative Example 8

Yttrium chloride and zirconium oxychloride in stoichiometric ratio were dissolved in water to formulate a mixed solution of $Y^{3+}$ and $Zr^{4+}$ with a total cation concentration of 1.0 M; the mixed material solution and 2.0 M sodium hydroxide solution were added to a reactor at constant-speed under stirring, and in the precipitation process, the pH value was controlled to be $10.7\pm0.2$, the endpoint pH value was 10.5, the temperature was controlled to be 30 °C, such that the cations were precipitated completely; then the precipitate was filtered, washed and dried, and the dried product was calcined at 600 °C for 24 hours to obtain a YSZ powder; YSZ was mixed with a liquid salt of lanthanum nitrate in doped La stoichiometric ratio, followed by another calcination at 1200 °C for 2 hours, to obtain a grain boundary and surface-doped rare earth zirconium-based ceramic powder $Y_{0.05}La_{0.01}Zr_{0.94}O_{1.97}$. After being sintered into ceramics, the flexural strength thereof was measured to be 1107.80 MPa by three-point bending test.

As can be seen from the above examples, the rare earth zirconium-based ceramic powders prepared by the examples of the present invention exhibit significant improvements in the flexural strength, electrical conductivity, fracture toughness and number of thermal shock cycles as compared to the comparative examples, and are capable of achieving significantly beneficial technical effects.

In summary, the present invention provides a rare earth zirconium-based ceramic material which is doped at surface and at grain boundary and a a a preparation method and application thereof, and an oxide of M is positioned at the grain boundary and surface of the rare earth zirconium-based ceramic material by grain boundary doping. The sintering activity of the rare earth zirconium-based ceramic material can be changed depending on the type and content of doping elements, thereby enabling the control of the grain size, the grain boundary number and the characteristics of the rare earth zirconium-based ceramic material, and finally optimizing the properties, such as electrical and mechanical properties, of the material. The technical solution of the present invention provides a universal method of grain boundary and surface doping, which realizes efficient and low-cost control of the grain boundary characteristics, thereby improving properties of rare-earth zirconium-based ceramic materials to meet the needs of different rare-earth zirconium-based ceramic materials with respect to the doping elements.

It will be understood that the specific embodiments described herein are only used to explain the invention, and are not intended to limit the invention. Therefore, any modification, equivalent substitution, improvement, etc. made without departing from the spirit and principle of the invention should be included within the scope of the claims of the invention. In addition, the appended claims of the present invention are intended to cover the full range of variations and modifications that fall within the scope and boundaries of the appended claims, or equivalent forms of such scope and boundaries.

## Claims

1. A rare earth zirconium-based ceramic material which is doped at surface and at grain boundary, **characterized in that** the rare-earth zirconium-based ceramic material has the formula $RE_xZr_{1-x-y}M_yO_{2-z}$, where

   RE is a rare earth element;
   M is a cationic doping element;

$$0.03 \leq x \leq 0.5, \ 0 < y \leq 0.15, \ 0.01 \leq z < 0.3.$$

2. The rare earth zirconium-based ceramic material which is doped at surface and at grain boundary according to claim 1, **characterized in that** the rare earth zirconium-based ceramic material contains an oxide of the doping element M at the grain boundary and surface.

3. The rare earth zirconium-based ceramic material which is doped at surface and at grain boundary according to claim 1, **characterized in that** the RE is one or a combination of more than one selected from Sc, Y, La, Gd, and Ce.

4. The rare earth zirconium-based ceramic material which is doped at surface and at grain boundary according to claim 1, **characterized in that** the M comprises one or a combination of more than one selected from a cationic transition metal element, an alkaline earth metal element, Al, Ga, In, Ge, Sn, Sb, Bi, Si, and a rare earth element.

5. The rare earth zirconium-based ceramic material which is doped at surface and at grain boundary according to claim 4, **characterized in that** the M comprises one or a combination of more than one selected from Mg, Ca, Sr, Al, Ga, V, Fe, Mn, Ni, Zn, Nb, In, Bi and a rare earth element, preferably one or a combination of more than one selected from Mg, Sr, Al, V, Ni, Bi, La, Ce, Pr, Nd, Sm, Eu , Gd, Er, Yb, Lu, Y and Sc, further preferably one or a combination of more than one selected from Mg, Al, Ni, Bi, La, Ce, Gd, Yb, and Lu.

6. The rare earth zirconium-based ceramic material which is doped at surface and at grain boundary according to claim 5, **characterized in that** the molar content of the M in the rare earth zirconium-based ceramic material is not more than 15%, preferably not more than 10%.

7. The rare earth zirconium-based ceramic material which is doped at surface and at grain boundary according to claim 1, **characterized in that** the rare earth zirconium-based ceramic material is one or more selected from a cubic fluorite structure, a tetragonal phase, a monoclinic phase and a rhombohedral phase, preferably one or two of the cubic fluorite structure and the tetragonal phase.

8. A method for preparing the rare earth zirconium-based ceramic material which is doped at surface and at grain boundary according to any one of claims 1-7, **characterized by** comprising the steps of:

   S1. mixing aqueous solutions of RE and Zr compounds in a stoichiometric ratio required for the product to obtain a mixed feed solution; adding the mixed feed solution and a basic substance to a reactor for carrying out precipitation reaction, and filtering, washing, drying and calcining the resulting precipitate to obtain a rare earth zirconium-based oxide powder;

S2. mixing the rare earth zirconium-based oxide powder material obtained in step S1 with a liquid salt of the doping element M, and drying, performing one or two heat treatments and then one or two calcinations to obtain the rare earth zirconium-based ceramic material which is doped at surface and at grain boundary.

9. A method for preparing the rare earth zirconium-based ceramic material which is doped at surface and at grain boundary according to any one of claims 1-7, **characterized by** comprising the steps of:

S1. mixing aqueous solutions of RE and Zr and a part of M compounds in a stoichiometric ratio required for the product to obtain a mixed feed solution; adding the mixed feed solution and a basic substance to a reactor for carrying out precipitation reaction, and filtering, washing, drying and calcining the resulting precipitate to obtain a rare earth zirconium-based oxide powder containing the M element;

S2. mixing the rare earth zirconium-based oxide powder containing the M element obtained in step S1 with a liquid salt of the remaining of the doping element M, and drying, performing one or two heat treatments and then one or two calcinations to obtain the rare earth zirconium-based ceramic material which is doped at surface and at grain boundary.

10. The method according to claim 8 or 9, the Zr-containing aqueous solution in step S1 comprises one or a combination of more than one aqueous solution selected from zirconium oxychloride, zirconyl nitrate, zirconyl sulfate, zirconium acetate, and zirconium citrate.

11. The method according to claim 8 or 9, **characterized in that**, the Re-containing aqueous solution in step S1 comprises one or a combination of more than one aqueous solution selected from chloride, nitrate, sulfate, acetate, and citrate of rare earths.

12. The method according to claim 8 or 9, **characterized in that**, the liquid salt of the doping element M comprises one or a combination of more than one molten salt or aqueous solution selected from chloride, nitrate, sulfate, acetate, citrate, and amino acid salt.

13. The method according to claim 8 or 9, **characterized in that**, the basic substance comprises magnesium bicarbonate, urea, and at least one selected from hydroxide, carbonate or bicarbonate containing at least one selected from ammonium, sodium and potassium, preferably at least one selected from sodium hydroxide, urea, ammon ia, and ammonium bicarbonate.

14. The method according to claim 8 or 9, **characterized in that**, the pH value in the precipitation process in step S1 is controlled to be 4.5 to 14, preferably 5 to 11, and the pH value at the precipitation endpoint is controlled to be 8 to 13, preferably 9 to 11; the temperature during the precipitation process is 0 to 120 °C, preferably 10 to 80 °C.

15. The method according to claim 8 or 9, **characterized in that**, the calcination temperature in step S1 is 600 to 1100 °C, preferably 650 to 950 °C, and the calcination time is 1 to 24 h, preferably 3 to15 h.

16. The method according to claim 8 or 9, **characterized in that**, the heat treatment temperature in step S2 is 200 to 750 °C, preferably 400 to 600 °C, further preferably 400 to 550 °C, and the heat treatment time is 1 to 24 h, preferably 1 to 12 h.

17. The method according to claim 8 or 9, **characterized in that**, the calcination temperature in step S2 is 700 to 1200 °C, preferably 800 to 1100 °C, further preferably 900 to 1100 °C, and the calcination time is 1 to 24 h, preferably 3 to 15 h.

18. Use of the rare earth zirconium-based ceramic material which is doped at surface and at grain boundary according to any one of claims 1-7 in applications such as grinding media, optical fiber connectors, mobile phone backboards, dental materials, biological ceramics, thermal barrier coatings, oxygen sensors or nitrogen-oxygen sensors, and solid oxide fuel cells.

RE, Zr-containing solution          Basic precipitant

```
                    ┌──────────────────────┐
                    │    Precipitation     │
                    └──────────────────────┘
                                │
                                ▼
                    ┌──────────────────────┐
                    │    Post-treatment    │
                    └──────────────────────┘
                                │
A liquid salt solution of M     ▼
                        RESZ precursor
                                │
                                ▼
                    ┌──────────────────────┐
                    │    Heat treatment    │
                    └──────────────────────┘
                                │
                                ▼
                    ┌──────────────────────┐
                    │     Calcination      │
                    └──────────────────────┘
                                │
                                ▼
         Rare earth zirconium-based ceramic material
```

FIG. 1

| INTERNATIONAL SEARCH REPORT | International application No. |
|---|---|
| | **PCT/CN2023/075757** |

**A. CLASSIFICATION OF SUBJECT MATTER**

C04B 35/48(2006.01)i;C04B 35/50(2006.01)i;C04B 35/622(2006.01)i

According to International Patent Classification (IPC) or to both national classification and IPC

**B. FIELDS SEARCHED**

Minimum documentation searched (classification system followed by classification symbols)

    C04B

Documentation searched other than minimum documentation to the extent that such documents are included in the fields searched

Electronic data base consulted during the international search (name of data base and, where practicable, search terms used)

    CNTXT, ENTXT, VEN, CNKI, ELSEVIER: 稀土, 锆, 氧化锆, 复合, 陶瓷, 钇, 铈, rare earth, zirconium, zirconia, zirconium oxide, composite, ceramics, Y, Ce, yttrium, cerium

**C. DOCUMENTS CONSIDERED TO BE RELEVANT**

| Category* | Citation of document, with indication, where appropriate, of the relevant passages | Relevant to claim No. |
|---|---|---|
| X | CN 112439407 A (GRIREM ADVANCED MATERIALS CO., LTD. et al.) 05 March 2021 (2021-03-05)<br>    claims 1-17, and embodiment 11 | 1-7, 18 |
| X | CN 112439408 A (GRIREM ADVANCED MATERIALS CO., LTD. et al.) 05 March 2021 (2021-03-05)<br>    claims 1-10 | 1-7, 18 |
| Y | CN 112439407 A (GRIREM ADVANCED MATERIALS CO., LTD. et al.) 05 March 2021 (2021-03-05)<br>    claims 1-17, and embodiment 11 | 8-17 |
| Y | CN 1433998 A (UNIVERSITY OF SCIENCE AND TECHNOLOGY OF CHINA) 06 August 2003 (2003-08-06)<br>    embodiment 9 | 8-17 |
| A | JP 2005247585 A (TOSOH CORP.) 15 September 2005 (2005-09-15)<br>    entire document | 1-18 |

☑ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 April 2023** | **11 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/075757** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 102417352 A (BEIJING GENERAL RESEARCH INSTITUTE FOR NONFERROUS METALS et al.) 18 April 2012 (2012-04-18)<br>entire document | 1-18 |
| A | CN 113930705 A (EAST CHINA UNIVERSITY OF SCIENCE AND TECHNOLOGY) 14 January 2022 (2022-01-14)<br>entire document | 1-18 |
| A | CN 103182302 A (BEIJING GENERAL RESEARCH INSTITUTE FOR NONFERROUS METALS et al.) 03 July 2013 (2013-07-03)<br>entire document | 1-18 |
| A | CN 113004035 A (GRIREM ADVANCED MATERIALS CO., LTD. et al.) 22 June 2021 (2021-06-22)<br>entire document | 1-18 |

Form PCT/ISA/210 (second sheet) (July 2022)

## INTERNATIONAL SEARCH REPORT
### Information on patent family members

| International application No. |
| --- |
| **PCT/CN2023/075757** |

| Patent document<br>cited in search report | | | Publication date<br>(day/month/year) | Patent family member(s) | Publication date<br>(day/month/year) |
| --- | --- | --- | --- | --- | --- |
| CN | 112439407 | A | 05 March 2021 | None | |
| CN | 112439408 | A | 05 March 2021 | None | |
| CN | 1433998 | A | 06 August 2003 | None | |
| JP | 2005247585 | A | 15 September 2005 | None | |
| CN | 102417352 | A | 18 April 2012 | None | |
| CN | 113930705 | A | 14 January 2022 | None | |
| CN | 103182302 | A | 03 July 2013 | None | |
| CN | 113004035 | A | 22 June 2021 | None | |

Form PCT/ISA/210 (patent family annex) (July 2022)

**REFERENCES CITED IN THE DESCRIPTION**

**Patent documents cited in the description**

- CN 202210135456